# EUROPÄISCHE PATENTSCHRIFT

(11) **EP 1 484 234 B1**
(45) Veröffentlichungstag und Bekanntmachung des Hinweises auf die Patenterteilung: **11.04.2007**
(21) Anmeldenummer: 04101959.7
(22) Anmeldetag: 06.05.2004
(51) Int. Cl.: B62D 15/02, B62D 1/06, B62D 1/04

(54) **Anzeigeanordnung für ein Kraftfahrzeug und Verfahren zur Ausgabe von Fahrerinformationen, insbesondere für eine Einparkhilfe**
Display arrangement for a motor vehicle and method for the output of driver information, in particular for a parking assistant device
Arrangement d'affichage pour un véhicule automoteur et procédé de sortie d'information conducteur, en particulier pour un dispositif d'aide au stationnement

(30) Priorität: 02.06.2003 DE 10324812
(43) Veröffentlichungstag der Anmeldung: 08.12.2004
(73) Patentinhaber: ROBERT BOSCH GMBH, 70442 Stuttgart (DE)
(72) Erfinder: Beutnagel-Buchner, Uwe, 70186 Stuttgart (DE)

(56) Entgegenhaltungen:
- DE-A- 2 704 519
- US-A- 4 743 883
- US-A- 4 931 930
- PATENT ABSTRACTS OF JAPAN Bd. 1995, Nr. 06, 31. Juli 1995 (1995-07-31) & JP 07 069236 A (NISSAN MOTOR CO LTD), 14. März 1995 (1995-03-14)

## Beschreibung

Die Erfindung bezieht sich auf eine Anzeigeanordnung für ein Kraftfahrzeug, ein Einparkhilfesystem mit einer derartigen Anzeigeanordnung, und ein Verfahren zu Ausgabe von Fahrerinformationen, insbesondere für eine Einparkhilfe.

Bei Fahrerassistenzsystemen, insbesondere Einparkhilfen, wird eine Änderung der Fahrzeugposition bzw. des Fahrzustandes ermittelt und dem Fahrer werden unter anderem Lenkwinkelsignale zur Anzeige eines erforderlichen Lenkeinschlages ausgegeben.

Zur Ausgabe der Fahrerinformationen sind zum einen akustische Systeme bekannt, bei denen der erforderliche Lenkwinkeleinschlag angesagt wird. Weiterhin sind optische Anzeigesysteme bekannt, bei denen z. B. auf einer Anzeigeeinrichtung im Cockpit des Fahrzeugs der Lenkwinkeleinschlag bzw. eine Richtungsangabe - links oder rechts - angezeigt wird. Die Umsetzung derartiger Lenkwinkelsignale durch den Fahrer ist jedoch oftmals umständlich. Insbesondere kann in der Regel die Größe des erforderlichen Lenkwinkeleinschlags nur schlecht dargestellt werden, so dass der Fahrer das Lenkrad entweder mit zeitlicher Verzögerung einschlägt oder um den erforderlichen Lenkeinschlag hinauslenkt, so dass ein dynamischer Einparkvorgang oftmals schwierig und zeitaufwendig ist. Eine Anzeige im Cockpit des Fahrzeugs, z.B. in dem Dashboard, ist zudem für den Fahrer unter Umständen schwer einsehbar und muss nach dem Erkennen vom Fahrer zunächst entsprechend umgesetzt werden.

Die DE 2704519 A1 zeigt eine Vorrichtung zur Anzeige des Einschlagwinkels eines Lenkrades eines Fahrzeugs. Hierbei ist es bekannt, beispielsweise an dem Lenkrad eine Skala vorzusehen, so dass ein Betrachter bei einem Verdrehen des Lenkrades den eingeschlagenen Lenkwinkel an der Skala ablesen kann. In einer Ausführungsform ist es auch bekannt, Anzeigeelemente vorzusehen, auf denen der von dem Lenkrad gerade eingeschlagene Lenkwinkel dargestellt wird.

Aus der JP 07-069 236 (Abstract) ist eine Anzeige bekannt, die hinter einem Lenkrad angeordnet ist. Über die Beleuchtung einer Leuchtdiode in der Anzeige wird ein gewünschter Lenkwinkel dargestellt. Ein Benutzer muss nunmehr nur noch das Lenkrad derart drehen, dass eine an dem Lenkrad angeordnete Markierung mit der außerhalb des Lenkrads angeordneten Leuchtdiode in eine Positions-Übereinstimmung gebracht wird.

Die US 4,931,930 zeigt eine Einparkhilfsvorrichtung, bei der Abstandssensoren Hindernisse in der Fahrzeugumgebung erfassen. In einer ersten Ausführungsform kann das Fahrzeug nach einer Benutzeraufforderung automatisch in eine Parklücke einparken. In einer anderen Ausführungsform werden dem Fahrer Fahrhinweise ausgegeben. Hierbei wird er dazu aufgefordert, beispielsweise einen Vollausschlag des Lenkrads nach links oder rechts vorzunehmen bzw. das Lenkrad in eine mittlere Position zu bringen.

Die erfindungsgemäße Anzeigeanordnung sowie das erfindungsgemäße Verfahren weisen gegenüber bekannten Anordnungen und Verfahren insbesondere den Vorteil auf, dass für den Fahrer leicht erkennbare und gut umsetzbare Fahrerinformationen ausgegeben werden. Hierdurch wird insbesondere die Aufmerksamkeit des Fahrers lediglich gering belastet. Die Unteransprüche beschreiben bevorzugte Weiterbildungen. Hierbei ist insbesondere eine Einparkhilfe mit einer erfindungsgemäßen Anzeigeanordnung vorgesehen.

Erfindungsgemäß erfolgt somit eine Anzeige eines einzustellenden Differenz-Lenkwinkels. Hierzu sind bei der erfindungsgemäßen Anzeigeanordnung an dem Lenkrad mehrere Anzeigegeelemente in Umfangsrichtung verteilt vorgesehen, die wahlweise selektiv beleuchtbar sind und somit gegenüber einem Referenzpunkt unterschiedliche Differenz-Lenkwinkel wiedergeben können. Hierdurch bekommt der Fahrer eine Anzeige direkt an der von ihm betätigten Handhabe, nämlich dem Lenkrad, wodurch eine direktere Zuordnung und Umsetzung des einzustellenden Sollwertes und der jeweiligen Stellung des Lenkrads erleichtert wird. Die Anzeige auf dem Lenkrad ist zudem leichter einsetzbar als entsprechende Anzeigen im Cockpit. Zudem ermöglicht die erfindungsgemäße Anzeigeanordnung zusätzliche Verwendbarkeiten, z. B. die Anzeige von Warnsignalen durch Aufleuchten, Blinken oder Laufmuster der Anzeigeelemente. Hierdurch kann auch ein Abbruch eines Einparkvorgangs, falls eine Einparkposition nicht mehr erreichbar ist, oder eine erreichte Einparkposition gekennzeichnet werden. Ferner kann auch eine Systembereitschaft der Einparkvorrichtung auf diese Weise angezeigt werden, z.B. ein Aktivieren der Sensoren oder ein Abschluss einer Berechnung einer Einparktrajektorie in eine Parklücke.

Die Anzeigeelemente, die z. B. als Leuchtdioden (light emitting diodes (LEDs)) ausgeführt sind, sind in Umfangsrichtung verteilt auf dem Lenkrad angeordnet, vorzugsweise ohne gro-ßen Abstand nebeneinander. Anstelle von Leuchtdioden können jedoch z.B. auch Glühlampen oder eine insbesondere flach ausgeführte Elektrolumineszenzanzeige mit einzelnen, ansteuerbaren Anzeigefeldern verwendet werden.

Die Leuchtdioden können z. B. mit einem geringen Abstand zu einander angeordnet oder als separat beleuchtbare Flächenbereiche einer durchgängigen Anzeigeeinrichtung ausgebildet sein. Zur Beleuchtung kann jeweils ein Anzeigeelement oder können auch zwei oder mehr nebeneinander angeordneten Anzeigeelemente beleuchtet werden. Eine Beleuchtung kann grundsätzlich auch durch eine andere Farbgebung, Transparenz oder Graustufe des jeweils beleuchteten Anzeigeelementes gegenüber den nicht beleuchteten Anzeigeelementen erreicht werden.

Der Referenzpunkt kann zum einen eine fahrzeugfeste Markierung, z. B. am Cockpit oberhalb des Lenkrads, sein, zu der der Fahrer das jeweils beleuchtete Anzeigeelement durch entsprechenden Lenkradeinschlag dreht. Weiterhin kann der Referenzpunkt auch virtuell durch Beleuchten jeweils eines Anzeigeelementes einer weiteren auf dem Lenkrad angeordneten Anzeigeeinrichtung wiedergegeben werden, wodurch ein virtueller Referenzpunkt erzeugt wird. Hierdurch können beide Anzeigeeinrichtungen am Lenkrad angeordnet werden und dennoch die Darstellung eines fahrzeugfesten Referenzpunktes erreicht werden.

In einer weiteren Ausführungsform kann der Referenzpunkt auch als ein virtueller Referenzpunkt festgelegt werden, ohne dass eine gesonderte Anzeige am Lenkrad, am Cockpit oder an anderer Stelle im Fahrzeug erfolgt, die auf den Referenzpunkt hinweist. Bevorzugt wird in diesem Fall der oberste Punkt des Lenkrades, also bei einer Übertragung eines Bildes eins Uhren-Zifferblattes auf das Lenkrad die "Zwölf-Uhr-Position", als Referenzpunkt festgelegt. Ist dem Fahrer dieser Referenzpunkt bekannt, kann er eine entsprechende Korrektur auf Basis des angezeigten Differenzwinkels zu diesem festgelegten Referenzpunkt auch nach Augenmaß vornehmen. Die "Zwölf-Uhr-Position" eignet sich hierzu besonders, da sie im Blickfeld des Fahrers liegt und auch nach Augenmaß leicht zu lokalisieren ist.

Bei dem erfindungsgemäßen Verfahren zur Ausgabe der Fahrerinformationen können die auf der Anzeigeanordnung darzustellenden Lenkwinkel-Anzeigesignale ermittelt werden, indem aus einer Startposition und einer ermittelten Zielposition des Fahrzeugs eine Trajektorie ermittelt wird, die eine theoretische Fahrkurve des Fahrzeugs zu einer Zielposition wiedergibt. Die Zielposition kann z. B. durch Abstandssensoren am Fahrzeug auf z. B. Ultraschall-, Radar- oder optischer Bildmesstechnik ermittelt werden. Ein Soll-Lenkwinkel des Fahrzeugs kann z. B. aus einer Tangente an der Trajektorie ermittelt werden, wozu ggf. fahrzeugspezifische Daten herangezogen werden, die aus empirischer Ermittlung oder theoretischer Ermittlung, z. B. aus der Spurbreite, Radstand und Lenkverhalten des Fahrzeugs, gewonnen werden. Der so ermittelte Soll-Lenkwinkel wird mit einem von einem Lenkwinkelsensor ermittelten aktuellen Lenkwinkelsignal verglichen, woraus ein Differenzwinkel ermittelt und als Differenzwinkel-Signal an die Anzeigeanordnung ausgegeben wird, so dass das Fahrzeug bei einer der Anzeige entsprechenden Korrektur des Lenkradeinschlags derart gelenkt wird, dass es der zuvor berechneten Solltrajektorie folgt.

Die Übermittlung des Differenzwinkel-Signals von der Steuereinrichtung - die z. B. die Steuereinrichtung eines Fahrdynamikregelungssystems sein kann - zu dem Lenkrad kann z. B. über ein herkömmliches Bussystem, z. B. einen CAN-Bus oder LIN-Bus des Fahrzeugs erfolgen, so dass kein weiterer apparativer Aufwand erforderlich ist.

Der Fahrer wird somit lediglich kontinuierlich das beleuchtete Anzeigenelement mit dem virtuellen oder einem zusätzlich angezeigten Referenzpunkt in Deckung bringen, so dass die bei herkömmlichen Systemen auftretenden Probleme eines zu zögerlichen Einschlagverhaltens oder Überlenkens zumindest teilweise vermieden werden.

Falls erkannt wird, dass der fortschreitende Einparkvorgang nicht zum zu erreichenden Ziel führt, kann das Verfahren, z. B. durch Ausschalten der Anzeige oder Aufleuchten bzw. eine Blinkanzeige beendet werden.

Durch eine größere Anzahl von Anzeigeelementen, d. h. eine feinere Auflösung des einzustellenden Differenz-Lenkwinkels, kann die vom Fahrer erreichbare Genauigkeit erhöht werden. Die Anzeigeelemente können z. B. im Winkelabstand von wenigen Grad, z. B. kleiner/gleich zehn oder einem Grad angeordnet sein. Die Anzeigeelemente sind vorteilhafterweise im Lenkrad versenkt, um die Haptik des Fahrers nicht zu beeinträchtigen. Sie können z. B. als LEDs ausgebildet sein, die z. B. zu einander einen definierten Abstand aufweisen oder direkt aneinander grenzen.

Die erfindungsgemäße Anzeigeeinrichtung kann entsprechend auch bei anderen Fahrsituationen, z. B. der Fahrzeugführung bei einem Navigationssystem zur Anzeige eines Abbiegevorgangs, verwendet werden.

Die Erfindung wird im Folgenden anhand der beiliegenden Zeichnungen an einigen Ausführungsformen näher erläutert. Es zeigen:
Fig. 1 eine Straßenszene mit einer Einparksituation eines Fahrzeugs;
Fig. 2 einen Cockpit-Bereich des Fahrzeugs mit einer Anzeigeanordnung gemäß einer Ausführungsform;
Fig. 3 eine der Fig. 2 entsprechende Darstellung gemäß einer weiteren Ausführungsform bei verdrehtem Lenkrad;
Fig. 4 ein Blockdiagramm einer erfindungsgemäßen Schaltungsanordnung.

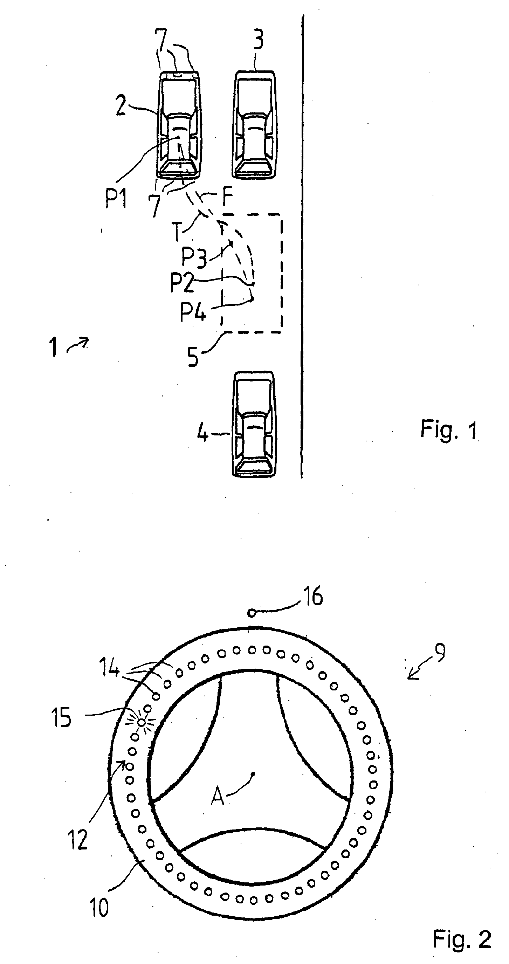

In einer Straßenszene 1 der Fig. 1 hat ein Fahrzeug 1 eine Startposition P 1 eingenommen zum Einparken in eine zwischen zwei parkenden Fahrzeuges 3 und 4 verbleibende Parklücke 5. Das Fahrzeug 1 weist Abstandssensoren 7 zum Ermitteln von Abständen zu den Fahrzeugen 3, 4 und ggf. weiteren, sich während des Einparkvorgangs nähernden Objekten, z. B. weiteren Fahrzeugen oder Fußgängern und Radfahrern, auf.

In dem Fahrzeug 1 ist eine in Fig. 2 gezeigte Anzeigeanordnung 9 vorgesehen. Auf der Oberseite bzw. fahrerzugewandten Seite eines Lenkrades 10 mit Drehachse A ist eine erste Anzeigeeinrichtung 12 ausgebildet mit mehreren, in Umfangsrichtung an dem Lenkrad 10 angebrachten, als erfindungsgemäße Anzeigelemente dienenden LEDs 14. Die LEDs 14 können direkt in dem Lenkrad 10 eingebracht oder erst auf einem Träger vormontiert und dann als Komponente in das Lenkrad 10 eingebracht sein. Ein Referenzpunkt 16, der z. B. farbig oder leuchtend sein kann, ist am Cockpit 17 des Fahrzeugs 1 oberhalb der Mitte des Lenkrads 10 vorgesehen. Eine LED 15 der LEDs 14 ist jeweils beleuchtet, um dem Fahrer einen einzuschlagenden Lenkwinkel anzuzeigen. Der einzuschlagende Differenz-Lenkwinkel entspricht somit dem Winkelabstand des beleuchteten Anzeigeelementes 15 gegenüber dem Referenzpunkt 16. Der Fahrer kann nachfolgend das Lenkrad 10 derartig drehen, dass die beleuchtete LED 15 direkt gegenüber der Markierung 16, d. h. gemäß Fig. 2 in der obersten Position des Lenkrads 10, positioniert ist.

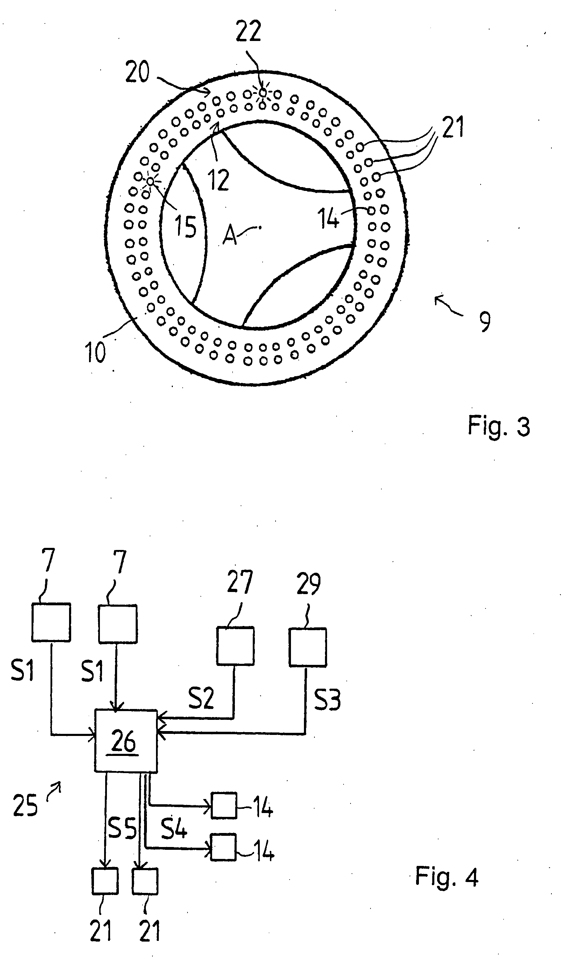

Bei der Ausführungsform der Fig. 3 ist radial außerhalb der ersten Anzeigeeinrichtung 12 zusätzlich eine zweite Anzeigeeinrichtung 20 mit in Umfangsrichtung an dem Lenkrad 10 verteilt angeordneten LEDs 21 vorgesehen. Die als äußere Reihe ausgebildete zweite Anzeigeeinrichtung 20 dient zur Darstellung des Referenzpunktes ohne entsprechende Markierung auf dem Cockpit 17. Bei dieser Ausführungsform wird der Referenzpunkt markiert, indem eine LED beleuchtet wird, so dass ohne eine Markierung am Cockpit 17 ein virtueller Referenzpunkt geschaffen wird, der auch bei Nachführen des Lenkrads 10 beibehalten wird.

Die Ausführungsform der Fig. 3 erfordert durch die zweite Anzeigeeinrichtung statt der Markierung zwar einen etwas höheren apparativen Aufwand, sie ermöglicht jedoch eine Anzeige ohne Einbeziehung des Cockpits, an dem ggf. weitere optische Anzeigeeinrichtungen vorgesehen sind, die durch die Markierung 16 der ersten Ausführungsform beeinträchtigt werden. Weiterhin wird die Genauigkeit der Nachführung des Lenkrads zum Referenzpunkt größer sein, da die Wahrnehmung und Zuordnung der Markierung 16 zu den LEDs 14 wesentlich einfacher und von der Sitzposition des Fahrers unabhängig ist.

Eine Anwendung der erfindungsgemäßen Anzeigeeinrichtung für ein Einparkhilfesystem ist unter Bezug auf eine in Fig. 4 gezeigte Schaltungsanordnung 25 gezeigt. Bei dem Einparkvorgang des Fahrzeugs 2 in die Parklücke 5 ermittelt eine Steuereinrichtung 26 aus Abstandsignalen S1 der Abstandssensoren 7 eine in Fig. 1 gezeigte Trajektorie T für einen Einparkvorgang von der Startposition P1 in eine Zielposition P2 in der Parklücke 5. Von einem Geschwindigkeitssensor 27 und einem Lenkwinkelsensor 29 des Fahrzeuges 2 werden während des Einparkvorgangs fortlaufend ein Geschwindigkeitssignal S2 und ein Lenkwinkelmesssignal S3 an die Steuereinrichtung 26 ausgegeben. Anstelle oder zusätzlich zu dem Geschwindigkeitssignal kann auch lediglich ein Wegsignal übermittelt werden, das eine Information über eine zurückgelegte Wegstrecke beinhaltet. Die Steuereinrichtung 26 ermittelt während des Einparkvorgangs jeweils einen aktuell einzuschlagenden Differenzlenkwinkel und gibt ein entsprechendes Differenz-Lenkwinkelsignal S4 an die LEDs 14 der ersten Anzeigeeinrichtung 12 aus. Hierdurch wird eine LED 14 als LED 15 beleuchtet, woraufhin der Fahrer die LED 15 zu der jeweiligen Markierung 16 hindrehen muss, d. h. gemäß Fig. 2 durch einen Linkseinschlag des Lenkrads 10.

Bei dem Lenkrad der Fig. 3 werden von der Steuereinrichtung 26 zum einen wiederum Differenz-Lenkwinkelsignale S4 an die LEDs 14 ausgegeben. Zusätzlich werden Anzeigesignale S5 an die LEDs 21 der zweiten Anzeigeeinrichtung 20 ausgegeben, bei denen unter Berücksichtigung des jeweiligen Lenkwinkeleinschlags immer die oberste LED als LED 22 beleuchtet wird.

Der Fahrer führt sein Fahrzeug 2 von der Startposition P1 entlang einer Fahrkurve F, die im Allgemeinen von der anfangs errechneten Trajektorie T abweicht, zu einer Endposition P4, die im Allgemeinen von der Zielposition P2 abweicht. Auf der Fahrkurve F nimmt das Fahrzeug 2 während des Einparkvorgangs jeweils Fahrpositionen P3 ein. Die Steuereinrichtung 26 ermittelt jeweils aufgrund des Lenkwinkelsignals S3 und des gefahrenen Weges - der sich als zeitliches Integral des Geschwindigkeitssignals S2 ergibt - die aktuelle Position P3, ermittelt jeweils korrigierte Signale S4, S5 und gibt diese über die LEDs 14, 21 an den Fahrer aus. Bei Erreichen der als hinreichend erkannten Endposition P4, oder auch bei Erreichen einer Fahrtposition P3, von der aus bei Weiterverfolgung des Einparkvorgangs keine Parkposition in der Parklücke 5 erreicht werden kann, wird der Einparkvorgang beendet. In diesem Fall kann dem Fahrer ein entsprechendes Endsignal bzw. Abbruchsignal über die Anzeigeeinrichtungen 12, 20 ausgegeben werden, indem z. B. die LEDs nicht mehr beleuchtet werden oder auch z. B. durch kurzes Aufleuchten oder Aufblinken der LEDs. Weiterhin kann auch eine Ausgabe eines anderen, z. B. akustischen, Endsignals bzw. Abbruchsignals erfolgen.

In einem in der Zeichnung nicht dargestellten Ausführungsbeispiel können zur Darstellung des Differenzlenkwinkels gegenüber dem Referenzpunkt auch mehrere, benachbarte Leuchtdioden gleichzeitig betrieben werden. Diese können auch alternierend derart aufleuchten, dass die Richtung der Abfolge der alternierend aufleuchtenden Leuchtdioden die Drehrichtung des Lenkrades anzeigt. Hierdurch kann ein Fahrer auf die vorzunehmende Drehrichtung hingewiesen werden. Dies ist insbesondere dann vorteilhaft, wenn das Lenkrad um mehr als 180 Grad gegenüber dem Referenzpunkt gedreht werden muss, da der Fahrer somit leicht die vorzunehmende Drehrichtung erkennt. Eine entsprechende Anzeige kann auch mittels unterschiedlicher farbig leuchtender Leuchtdioden realisiert werden, z.B. rote LED leuchtet in Drehrichtung, wobei sich entgegen der Drehrichtung drei grün Leuchtdioden anschließen. In einer weiteren Ausführungsform kann zusätzlich oder statt dessen an dem Lenkrad oder in einer anderen Anzeige im Fahrzeug auch eine Pfeilgrafik dargestellt werden, die die vorzunehmende Drehrichtung anzeigt.

## Patentansprüche

1. Anzeigeanordnung für ein Kraftfahrzeug, **dadurch gekennzeichnet, dass** die Anzeigeanordnung eine erste Anzeigeeinrichtung (12) mit mehreren, in Umfangsrichtung an einem Lenkrad (10) des Fahrzeugs (2) verteilt vorgesehenen Anzeigeelementen (14) aufweist, die wahlweise beleuchtbar sind zur Anzeige eines Differenzlenkwinkels in Bezug auf einen Referenzpunkt (16, 22), der bei Drehen des Lenkrads (10) unveränderbar ist.

2. Anzeigeanordnung nach Anspruch 1, **dadurch gekennzeichnet, dass** die Anzeigeelemente (14) an dem Lenkrad (10) mit gleichmäßigem Winkelabstand über den ganzen Umfang des Lenkrades (10) umlaufend verteilt angeordnet sind.

3. Anzeigeanordnung nach Anspruch 1 oder 2, **dadurch gekennzeichnet, dass** der Referenzpunkt eine Markierung (16) außerhalb des Lenkrads (10) ist.

4. Anzeigeanordnung nach Anspruch 1 oder 2, **dadurch gekennzeichnet, dass** die Anzeigeanordnung eine radial zur ersten Anzeigeeinrichtung (12) beabstandete zweite Anzeigeeinrichtung (20) mit in Umfangsrichtung auf dem Lenkrad (10) angeordneten, wahlweise beleuchtbaren zweiten Anzeigeelementen (21) aufweist, wobei der Referenzpunkt (22) durch Beleuchten mindestens eines Anzeigeelementes (22) in einer im Wesentlichen cockpitfesten Position erzeugbar ist.

5. Anzeigeanordnung nach Anspruch 4, **dadurch gekennzeichnet, dass** die Anzeigeanordnung zwei in Umfangsrichtung auf dem Lenkrad (10) konzentrisch angeordnete Anzeigereihen (12, 20) mit beleuchtbaren Anzeigeelementen (14, 15, 21, 22) aufweist.

6. Einparkhilfesystem (25) für ein Fahrzeug (2), mit einer Steuereinrichtung (26), Abstandssensoren (7) zur Messung von Abständen von Objekten (3, 4) zu dem Fahrzeug (2) und Ausgabe von Abstandssignalen (S1) an die Steuereinrichtung (26), einem Bewegungssensor (27) zum Ermitteln einer Fahrzeugbewegung oder einer Fahrzeuggeschwindigkeit und Ausgabe eines Bewegungssignals oder Geschwindigkeitssignals (S2) an die Steuereinrichtung (26),
einem Lenkwinkelsensor (29) zum Ermitteln eines Lenkwinkels und Ausgabe eines Lenkwinkelsignals (S3) an die Steuereinrichtung (26), und einer Anzeigeanordnung (9) nach einem der vorherigen Ansprüche, wobei die Steuereinrichtung (26) aus den Abstandssignalen (S1) die Zielposition (P2) des sich in einer Startposition (P1) befindenden Fahrzeugs und eine von der Startposition (P1) zu der Zielposition (P2) führende Trajektorie (T) ermittelt, und wobei die Steuereinrichtung (26) aus der Trajektorie (T) und einer aktuellen Position (P3) des Fahrzeugs (2) einen Soll-Lenkwinkel und aus dem Soll-Lenkwinkel und den Lenkwinkelsignalen (S3) einen Differenzlenkwinkel ermittelt und ein Differenz-Lenkwinkelsignal (S4) zur Anzeige eines Lenkwinkeleinschlags an die Anzeigeanordnung (9) ausgibt.

7. Einparkhilfesystem nach Anspruch 6, **dadurch gekennzeichnet, dass** die Steuereinrichtung (26) die aktuelle Position (P3) des Fahrzeugs (2) aus der Startposition (P1), den Lenkwinkelsignalen (S3) und Geschwindigkeitssignalen (S2) eines Geschwindigkeitssensors (27) ermittelt.

8. Verfahren zur Ausgabe von Fahrerinformationen, bei dem aus Abstandsignalen (S1) eine Zielposition (P2) eines Fahrzeugs (2) ermittelt wird, eine Trajektorie (T) des Fahrzeugs (2) von einer Startposition (P1) zu der ermittelten Zielposition (P2) ermittelt wird, aus der ermittelten Trajektorie (T) ein Soll-Lenkwinkel ermittelt wird, und aus dem Soll-Lenkwinkel und einem aktuell gemessenen Lenkwinkelsignal (S3) ein Differenz-Lenkwinkelsignal (S4) ermittelt und an eine Anzeigeeinrichtung (12) auf einem Lenkrad (10) des Fahrzeugs (2) ausgegeben wird, wobei in Abhängigkeit von dem Differenz-Lenkwinkelsignal (S4) ein Anzeigeelement (15) von mehreren auf einem Lenkrad (10) des Fahrzeugs (1) in Umfangsrichtung verteilt angeordneten Anzeigeelementen (14) beleuchtet wird derartig, dass der für den Differenz-Lenkwinkel am Lenkrad (10) einzustellende Lenkradeinschlag dem Winkelabstand des beleuchteten Anzeigeelementes (15) gegenüber einem Referenzpunkt (16, 22) entspricht.

9. Verfahren nach Anspruch 8, **dadurch gekennzeichnet, dass** die aktuelle Position (P3) des Fahrzeugs (2) aus der Startposition (P1), den Lenkwinkelsignalen (S3) und Geschwindigkeitssignalen (S2) eines Geschwindigkeitssensors (27) ermittelt wird.

10. Verfahren nach einem der Ansprüche 8 bis 9, **dadurch gekennzeichnet, dass** als Referenzpunkte (22) wahlweise ein oder mehrere zweite Anzeigeelemente (21) einer auf dem Lenkrad (10) vorgesehenen zweiten Anzeigeeinrichtung (20) beleuchtet werden derartig, dass eine Position eines jeweils beleuchteten zweiten Anzeigeelementes (22) positionsfest gegenüber einem Cockpit (17) des Fahrzeugs (1) ist.

11. Verfahren nach einem der Ansprüche 8 bis 10, **dadurch gekennzeichnet, dass** in dem Fall, dass eine Endposition (P4) in der Nähe der Zielposition (P2) erreicht wird oder der Fall erkannt wird, dass eine Endposition (P4) nicht erreichbar ist, das Verfahren beendet wird.

## Claims

1. Display arrangement for a motor vehicle, **characterized in that** the display arrangement has a first display device (12) having a plurality of display elements (14) which are provided distributed in the circumferential direction on a steering wheel (10) of the vehicle (2) and which can optionally be illuminated in order to display a differential steering angle with respect to a reference point (16, 22) which is invariable when the steering wheel (10) rotates.

2. Display arrangement according to Claim 1, **characterized in that** the display elements (14) are arranged on the steering wheel (10) distributed circumferentially with a uniform angular distance over the entire circumference of the steering wheel (10).

3. Display arrangement according to Claim 1 or 2, **characterized in that** the reference point is a mark (16) outside the steering wheel (10).

4. Display arrangement according to Claim 1 or 2, **characterized in that** the display arrangement has a second display device (20) which is spaced apart radially from the first display device (12) and has second display elements (21) which are arranged in the circumferential direction on the steering wheel (10) and can optionally be illuminated, wherein the reference point (22) can be generated by illuminating at least one display element (22) in a position which is essentially fixed with respect to the cockpit.

5. Display arrangement according to Claim 4, **characterized in that** the display arrangement has two rows (12, 20) of displays which are arranged concentrically in the circumferential direction on the steering wheel (10) and have display elements (14, 15, 21, 22) which can be illuminated.

6. Parking assistant system (25) for a vehicle (2), having a control device (26), distance sensors (7) for measuring distances from objects (3, 4) to the vehicle (2) and outputting distance signals (S1) to the control device (26), a movement sensor (27) for determining a vehicle movement or a vehicle speed and outputting a movement signal or speed signal (S2) to the control device (26), a steering angle sensor (29) for determining a steering angle and outputting a steering angle signal (S3) to the control device (26), and a display arrangement (9) as claimed in one of the preceding claims, the control device (26) determining, from the distance signals (S1), the target position (P2) of the vehicle which is located in a starting position (P1) and a trajectory (T) leading from the starting position (P1) to the target position (P2), and the control device (26) determining a setpoint steering angle from the trajectory (T) and a current position (P3) of the vehicle (2), and a differential steering angle from the setpoint steering angle and the steering angle signals (S3), and outputting a differential steering angle signal (S4) for displaying a steering lock to the display arrangement (9).

7. Parking assistant system according to Claim 6, **characterized in that** the control device (26) determines the correct position (P3) of the vehicle (2) from the starting position (P1), the steering angle signals (S3) and the speed signals (S2) of a speed sensor (27).

8. Method for outputting driver information in which a target position (P2) of a vehicle (2) is determined from the distance signals (S1), a trajectory (T) of the vehicle (2) is determined from a starting position (P1) for the target position (P2) which is determined, a setpoint steering angle is determined from the trajectory (T) which is determined, and a differential steering angle signal (S₄) is determined from the setpoint steering angle and a currently measured steering angle signal (S3) and is output to a display device (12) on a steering wheel (10) of the vehicle (2), a display element (15) being illuminated by a plurality of display elements (14) arranged distributed on a steering wheel (10) of the vehicle (1) in the circumferential direction as a function of the differential steering angle signal (S4), in such a way that the steering wheel lock to be set for the differential steering angle at the steering wheel (10) corresponds to the angular distance of the illuminated display element (15) from a reference point (16, 22).

9. Method according to Claim 8, **characterized in that** the current position (P3) of the vehicle (2) is determined from the starting position (P1), the steering angle signals (S3) and speed signals (S2) of a speed sensor (27).

10. Method according to one of Claims 8 to 9, **characterized in that** one or more second display elements (21) of a second display device (20) provided on the steering wheel (10) are optionally illuminated in such a way that a position of a respectively illuminated second display element (22) is fixed in position with respect to a cockpit (17) of the vehicle (1).

11. Method according to one of Claims 8 to 10, **characterized in that** if an end position (P4) is reached in the vicinity of the target position (P2) or if it is detected that an end position (P4) cannot be reached the method is terminated.

## Revendications

1. Ensemble d'affichage pour un véhicule automobile, comprenant :
un premier dispositif d'affichage (12) avec plusieurs éléments d'affichage (14) répartis sur la périphérie du volant (10) du véhicule (2), et que l'on peut éclairer au choix pour afficher un angle différentiel de braquage par rapport à un point de référence (16, 22) invariable lors d'une rotation du volant (10).

2. Ensemble d'affichage selon la revendication 1,
**caractérisé en ce que**
les éléments d'affichage (14) sont répartis sur le volant (10) à une distance angulaire régulière sur toute la périphérie du volant (10).

3. Ensemble d'affichage selon la revendication 1 ou 2,
**caractérisé en ce que**
le point de référence est un repère (16) à l'extérieur du volant (10).

4. Ensemble d'affichage selon la revendication 1 ou 2,
**caractérisé en ce que**
l'ensemble d'affichage présente un deuxième dispositif d'affichage (20) radialement écarté du premier dispositif d'affichage (12) et comprenant des seconds éléments d'affichage (21) que l'on peut éclairer au choix sur la périphérie du volant (10), le point de référence (22) pouvant être généré par l'éclairage d'au moins un élément d'affichage (22) dans une position essentiellement solidaire du poste de pilotage.

5. Ensemble d'affichage selon la revendication 4,
**caractérisé en ce que**
l'ensemble d'affichage présente deux rangées d'affichage (12, 20) concentriques en périphéries sur le volant (10) et munies d'éléments d'affichage (14, 15, 21, 22) pouvant être éclairés.

6. Système d'assistance au stationnement (25) pour un véhicule (2), comprenant un dispositif de commande (26), des capteurs de distance (7) pour mesurer des distances d'objets (3, 4) par rapport au véhicule (2) et émettre des signaux de distance (S1) vers le dispositif de commande (26), un capteur de mouvement (27) pour déterminer un mouvement du véhicule ou une vitesse du véhicule et émettre un signal de mouvement ou un signal de vitesse (S2) vers le dispositif de commande (26), un capteur d'angle de braquage (29) pour déterminer un angle de braquage et émettre un signal d'angle de braquage (S3) vers le dispositif de commande (26), et un ensemble d'affichage (9) selon l'une quelconque des revendications précédentes,
dans lequel le dispositif de commande (26) détermineà partir des signaux de distance (S1) la position cible (P2) du véhicule se trouvant dans une position de départ (P1) et une trajectoire (T) partant de la position de départ (P1) vers la position cible (P2), et le dispositif de commande (26) détermine un angle de braquage de consigne à partir de la trajectoire (T) et d'une position réelle (P3) du véhicule (2) et un angle différentiel de braquage à partir de l'angle de braquage de consigne et des signaux d'angle de braquage (S3), et émet vers l'ensemble d'affichage (9) un signal d'angle différentiel de braquage (S4) pour afficher un braquage d'angle de braquage.

7. Système d'assistance au stationnement selon la revendication 6,
**caractérisé en ce que**
le dispositif de commande (26) détermine la position réelle (P3) du véhicule (2) à partir de la position de départ (P1), des signaux d'angle de braquage (S3) et de signaux de vitesse (S2) d'un capteur de vitesse (27).

8. Procédé d'émission d'informations pour le conducteur, selon lequel on détermine une position cible (P2) d'un véhicule (2) à partir de signaux de distance (S1), une trajectoire (T) du véhicule (2) depuis une position de départ (P1) jusqu'à la position cible (P2) déterminée, un angle de braquage de consigne à partir de la trajectoire (T) déterminée, et à partir de l'angle de braquage de consigne et d'un signal d'angle de braquage (S3) mesuré, un signal d'angle différentiel de braquage (S4) que l'on transmet à un dispositif d'affichage (12) sur un volant (10) du véhicule (2), en éclairant un élément d'affichage (15) parmi plusieurs éléments d'affichage (14) répartis sur la périphérie du volant (10) du véhicule (2) en fonction du signal d'angle différentiel de braquage de différence (S4) de sorte que le braquage à régler sur le volant (10) pour l'angle différenciel correspond à la distance angulaire de l'élément d'affichage (15) éclairé par rapport à un point de référence (16, 22).

9. Procédé selon la revendication 8,
**caractérisé en ce qu'**
on détermine la position réelle (P3) du véhicule (2) à partir de la position de départ (P1), des signaux d'angle de braquage (S3) et de signaux de vitesse (S2) d'un capteur de vitesse (27).

10. Procédé selon l'une quelconque des revendications 8 à 9,
**caractérisé en ce que**
comme points de référence (22) on éclaire au choix un ou plusieurs deuxièmes éléments d'affichage (21) d'un deuxième dispositif d'affichage (20) prévu sur le volant (10), de sorte qu'une position d'un deuxième élément d'affichage (22) respectivement éclairé est une position fixe par rapport à un poste de pilotage (17) du véhicule (2).

11. Procédé selon l'une quelconque des revendications 8 à 10,
**caractérisé en ce que**
si une position finale (P4) est atteinte à proximité de la position cible (P2) ou si on détecte qu'une position finale (P4) ne peut pas être atteinte, on termine le procédé.
